# EUROPEAN PATENT APPLICATION

(11) **EP 3 333 128 A1**
(43) Date of publication of application: **13.06.2018**
(21) Application number: 16002598.7
(22) Date of filing: 07.12.2016
(51) Int. Cl.: C01G 45/00, C01G 49/00, C01B 19/00, C01G 1/00, C01G 51/00

(54) **NOVEL CHARGEABLE CRYSTALLINE MATERIALS, IN PARTICULAR FOR USE AS ELECTRODE MATERIALS IN ELECTROCHEMICAL STORAGE DEVICES**

(71) Applicant: Max-Planck-Gesellschaft zur Förderung der Wissenschaften e.V., 80539 München (DE)
(72) Inventor: Valldor, Martin, 01159 Dresden (DE); Antonyshyn, Iryna, 01187 Dresden (DE); To Lai, Kwing, Tai Po (HK)
(74) Representative: v. Bezold & Partner Patentanwälte - PartG mbB

(57) **Abstract**

The invention relates to a novel crystalline material having the formula A_{3-(x+y)}TM_{y}DE, wherein
A = a cation selected from alkali metal or alkaline earth metal ions and mixtures thereof, TM = a transition metal cation, D and E are 2 different anions,
x may be in the range from 0 ≤ x ≤ 2, preferably in the range from 0 ≤ x ≤ 1.5, more specifically in the range from 0 ≤ x ≤ 1, in particular 0, and indicates the number of vacant lattice positions of A,
y is in the range from 0 < y ≤ 2, preferably in the range from 0.5 < y < 1.5, typically 1 or very close to 1, for example in the range from 0.9 to 1.1, such as 0.9 or 0.95 to 1, or 1 to 1.05 or 1.1,
the sum of the negative formal charges of D + E is in the range from -4 to -8,
and with the proviso that the material does not contain structure-building halogen atoms or ions.

In some specific embodiments of the claimed crystalline material, A is Li, TM is selected from Fe, Co, Mn, D is selected from S, Se and Te, and E is O.

In a preferred embodiment of the invention, the crystalline material has an anti-perovskite structure.

Further aspects of the invention relate to a favourable method for preparing said crystalline material and to uses thereof, in particular as an electrode material.

## Description

### Background of the invention

In the last decade based on various economic and ecological grounds, not least for preventing a climatic catastrophe, the development of more efficient, but at the same time more cost-effective electric storage systems such as batteries and capacitors with as much as possible advantageous chemical, electric and mechanical properties and good environmental compatibility, received a high priority worldwide.

For energy storage, on the one hand, battery systems are used when it is necessary to store large amounts of energy for a long time; on the other hand, double layer capacitors are used when a given application requires high power density and cycle stability.

In batteries, the energy is stored electrochemically in oxidation or reduction processes. In this way, today the energy density in commersially available lithium ion batteries is about 200 mAh g⁻¹.

For the development of more efficient storage systems, among other things, various new electrode materials with improved properties were developed and used.

One such synthetically produced material was Li₁₋ₓCoO₂, e.g. as disclosed in US 4,357,215.

Zhao et al. (US 2013/0202971 A1) describe halide-containing solid electrolyte compositions exhibiting an anti-perovskite structure.

EP 1367661 A2 discloses a cathode active material for lithium ion secondary batteries which is a Li-containing composite oxide comprising a plurality of transition metal elements selected from Cr, Mn, Fe, Co, Ni, and Cu, and having a monoclinic crystal structure.

In US 2005/0019661 A1 a cathode active material including a compound of formula LiₓCo_{y}M_{1-y}A₂ is disclosed, wherein M is at least one selected from a specific group of metals, in particular transition metals, and A is one selected from the group consisting of O, F, S and P. The crystal structure of this material is disclosed to be spinel-like.

US 2012/0068109 A1 describes a cathode material for secondary lithium batteries which is a material with composite structures formed with more than two different components selected from a general formula [LiₐM_{1-y}M'_{y}O_{b}X_{c}).

High charge-rates and low costs were realized with the spinel-like materials of the formula Li₁₋ₓM₂O₄ (in particular M = Mn), but these materials suffer from battery degredation on cycling due to high working voltages that cause electrochemical decomposition of involved electrolytes.

Olivine structured Li₁₋ₓFePO₄ also represents a battery cathode material with high charge-capacity and low costs, but the charge rates are relatively low due to slow Li ion migration. The reason for this problem is identified as Li-Fe inter-site mixing and the low dimensionality of Li-migration paths (1D tunnels) - Ref: J. Wang, Y. K. Chen-Wiegart and J. Wang, Nat. Commun., 2014, 5, 4570. Nevertheless, Li₁₋ₓFePO₄ is already applied in low energy technology, due to its environmetally friendly disposal.

Although very expensive, LiₓAg₂V₄O₁₁ is used commercially to drive implantable cardioverter defibrillators. It is used because of its high charge/discharge rates and chemical stability.

In view of this prior art, a main object underlying the present invention is to provide other chargeable materials having improved properties and/or which can be produced in a simple and cost-effective manner, for use in various electrochemical storage devices on the basis of aqueous and non-aqueous systems, in particular for batteries.

This object has been achieved by providing the novel crystalline material acording to claim 1 as well as by providing the method for preparing the same according to claim 7.

Additional aspects and more specific embodiments of the invention are the subject matter of the further claims.

The novel crystalline material of the invention according to claim 1 is a crystalline material having the formula A_{3-(x+y)}TM_{y}DE, wherein
A = a cation selected from alkali metal or earth alkali metal ions and mixtures thereof, TM = a transition metal cation, D and E are 2 different anions, typically at two different crystallographic sites with little (e.g. less than 10 %, 5 %, 1 % or 0.5 %) or no intermixing,
x may be in the range from 0 ≤ 2, preferably in the range from 0 ≤ 1.5, more specifically in the range from 0 ≤ 1, and indicates the number of vacant lattice positions of A; x is 0 or essentially 0 in the pristine material as synthesized and becomes larger in the charged material used in a battery,
y is in the range from 0 < y < 2, preferably in the range from 0.5 < y < 1.5, typically 1 or very close to 1, for example in the range from 0.9 to 1.1, such as 0.9 or 0.95 to 1, or 1 to 1.05 or 1.1,
the sum of the negative formal charges of D + E is in the range from -4 to -8,
and with the proviso that the material does not contain structure-building halogen atoms or ions.

More specifically, the anions D and E are anions of elements from groups 13-16 of the periodic system, in particular selected from the group comprising B, Al, C, Si, Sn, Pb, N, P, As, Sb, Bi, Ga, Ge, In, O, S, Se, Te, and Tl.

In the crystalline material of the invention, the transition metal (TM) is typically selected from the group comprising the elements having an atomic number in the range from 21-30, 39-48, 57-80, preferably in the range from 21-30, and mixtures thereof.

The basic structure of the crystalline material according to the invention is typically 3-dimensional.

In a preferred embodiment of the invention, the crystalline material has an anti-perovskite structure.

Representatives for the crystal structure named "perovskite" are for example the natural mineral CaTiO₃ and cubic SrTiO₃ or hexagonal BaCrO₃.

The prefix "anti" means that the cations are replaced by anions and the anions by cations to relate different crystal structures. Typical cubic anti-perovskites are Ti₃SbN, where Ti replaces O, Sb replaces Sr, and N replaces Ti, compared with SrTiO₃.

Further, the crystalline material of the invention may have a cubic or pseudocubic, hexagonal, trigonal, or rhombohedral lattice structure.

More specifically, these structures are either cubic (or pseudocubic) with unit cell parameter *a* in the range 3.7-4.5 Å or hexagonal (any *n*H, where *n* is an even number, e.g. 2H, 4H, 6H, etc. or equivalent rhombohedral settings.

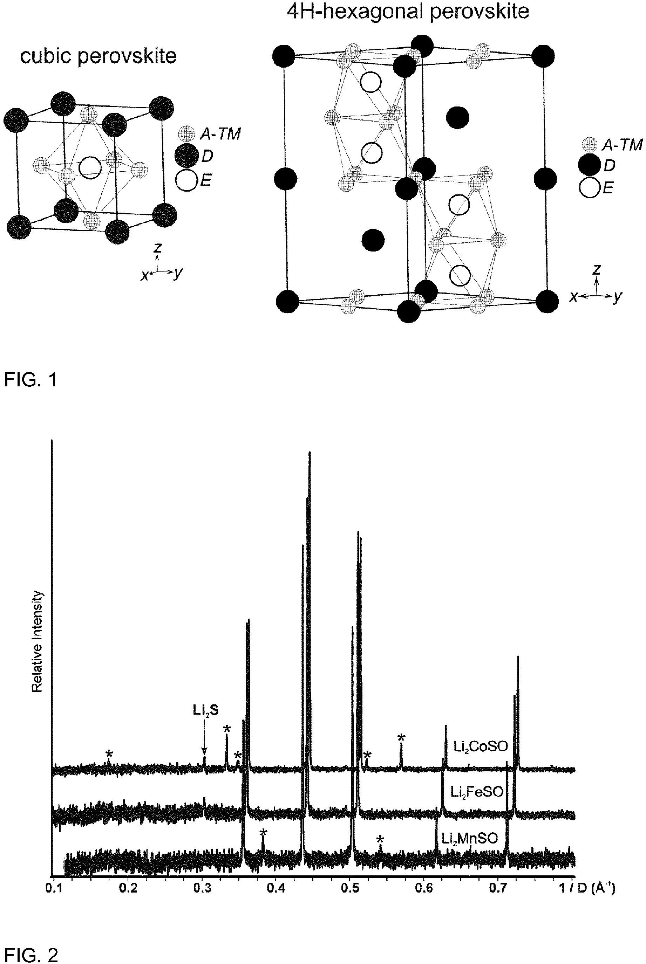

Figure 1 illustrates typical structures: (left) The unit cell content of cubic (or average of pseudo-cubic) anti-perovskite (A-TM)₃DE with emphasized E(A-TM)₆ octahedron. (right) An example or a 4H-hexagonal anti-perovskite with exhibited arrangement of octahedra.

With respect to the anions D and E, there will be a major size difference so that D and E typically not mix significantly, i.e. do not occupy the same lattice positions However, the metal site (A⁺/TMⁿ⁺) may contain a mixture of A and TM or there may be a super-structure ordering of A and TM within the D-E lattice.

In some preferred embodiments of the crystalline material of the invention A is Li, TM is selected from Fe, Co, Mn, D is selected from S, Se and Te, and E is O.

A further aspect of the present invention relates to a favourable method for preparing the crystalline material as defined above.

Generally, said method comprises at least the following steps:
a) preparing a powdery mixture of A₂D + TME, or AD + A + TME, or A₂E + TMD, or AE + A + TMD, or A₂D + TM + E, or AD + A + TM + E, or A₂E + TM + D, or AE + A + TM + D;
b) heating the mixture up to a temperature of at least 600 °C, preferably at a heating rate of 30-70 °C h⁻¹ for a time period in the range from 1 to 20 hours, in particular from 1 to 10 hours;
c) quenching the product obtained in step b) to room temperature (typically 15-25°C, such as 20-25°C), preferably within a time period in the range from 1 s to an hour, more preferred within a range from 1 s to 5 minutes, more preferred within 1 minute, whereby a crystalline material as defined above is obtained.

Preferably, at least step b), more preferred all steps are performed in an inert gas atmosphere, such as a nitrogen or argon atmosphere, or in vacuum.

The quenching may be, e.g., effected by contacting the reaction vessel with a cooling medium having a relatively high heat capacity, such as for example (ice-) water or a medium with a similar or higher heat capacity.

The quenching step is essential to obtain a highly pure material.

In one specific embodiment, said method is a method for preparing Li₂FeSeO wherein
a) a powdery mixture of Li₂O, Fe and Se is prepared;
b) said mixture is heated up to a temperature in the range 730 to 770 °C at a heating rate of about 50°C h⁻¹ for a time period in the range from 1-10 h, preferably 2-5 h or 2-3 h.

Typically, the resulting materials have already a purity of more than 95 % without any further purification steps. These materials are slightly air-sensitive, but can be used directly - without electrochemical treatment - as opposed to Li₁₋ₓCoO₂.

The chargeable crystalline material according to the present invention has a broad range of favourable applications in various fields. Thus, said crystalline material may be used for example as an electro-active separator material, a semi-permeable membrane, thermoelectrics, or a read/writeable data storage material.

However, in an especially preferred embodiment of the invention, said crystalline material is used as an electrode material.

Typical battery charging reactions of these materials are shown below:
For example, the reaction for alkali-metal extraction is as follows with D = Se, E = O, and y = 1:

   A₂TMSeO --> x A⁺ + x e⁻ + A₂₋ₓTMSeO

Thus, the oxidation state of TM changes during the alkali-metal extraction according to: TM²⁺ ---> TM^{(2+x)+}.

A similar charging reaction is possible for an alkaline-earth metal containing compound, for example in the case of A = Mg, TM = Fe, D = Pb, E = O, and y = 1:

A₂TMPbO --> x A²⁺ + 2x e⁻ + A₂₋ₓTMPbO,

where the oxidation state of TM changes during the alkali-metal extraction according to: TM²⁺ ---> TM^{(2+2x)+}.

Preferably, the crystalline material according to the invention is subjected to a pre-charging step, typically in a time range from 0.5-5 h, e.g. 1-3 h or 1-2 h, before the main charging/discharging steps are performed.

At least a charge rate of 3 C was reached so far without any material degradation. Here, C is defined as h⁻¹ for a complete charging sequence: 3 C means that full charge (or discharge) is reached in 20 minutes. As shown in the Examples, 10 cycles were performed with e.g. Li₂FeSeO at this rate and subsequently the crystallinity was confirmed by x-ray diffraction to be still good. Further, there are no indications of phase decomposition.

For the discharging step, the same rate may be used, however, a slower discharge (e.g. about 0.2 mA cm⁻²) still resulted in a rather high discharge capacity (e.g. about 70 mAh g⁻¹).

The crystalline material used according to the invention can be obtained as a single crystal, or as a microcrystalline (500 µm - 1 µm) or nanocrystalline (0.999 µm - 0.001 µm) material.

In one embodiment, the crystalline material is ground to powder and then can, eventually in the presence of a suitable binder such as polyvinylidene difluoride (PVdF), be cast into suitable morphologies, like bars, pellets, or foils.

The electrode material, which comprises a crystalline material as described above or consists of it, is typically, eventually by adding electronically conducting auxiliary material, preferably graphite, deposited on electronically conducting substrate material, which is selected from the group of metals (e.g. aluminium, copper, titanium), alloys (e.g. steel, bronze) or electronically conducting plastics (e.g. poly(p-phenylene-vinylene) (PPV), polyaniline (PANI), polypyrrole (PPy), polythiophene), and constitutes an electrode with the same. Alternatively, the electrode may also consist only of this electrode material. This electrode may be an anode or a cathode, preferably it is a cathode.

The electrode material can be deposited on the substrate material in the traditional way as powder, as foil with a binding agent. However, it is also possible that the deposition on the substrate material takes place by direct coating using principally known methods, for example a thin layer may be deposited by either molecular-beam-epitaxy- or laser-ablation-technique.

The direct coating has the advantage of a very simple and extremely cost-effective production and offers, in addition, an advantage in that - due to the absence of binding and filling agents - a corresponding capacity loss of electrode material is prevented.

In another aspect, the present invention relates to an electrochemical storage device, which comprises crystalline material as defined above or the above-described electrode, in particular as the cathode.

This electrochemical storage device is typically a battery, in case that the electrode material has oxidable or reducible centres (metal cations such as Ti, V, Cr, Mn, Fe, Co, Ni, Cu), in particular a rechargeable secondary battery. In a preferred embodiment, this is a prismatic battery.

Preferably, the battery is a Li, Na, K, or Ag ion battery, particularly preferably a lithium ion battery, and the crystalline material used as electrode material according to the invention then contains exclusively or predominantly the corresponding type of cations as mobile and conducting cations.

Basically, all types and arrangements which are known in the state of the art for such batteries, in particular secondary batteries, with aqueous and non-aqueous electrolytes and, depending on the type, with or without separator, may be used.

Particularly preferably, however, the materials, according to the invention are used in non-aqueous systems (with aprotic electrolytes). With these non-aqueous battery systems according to the invention, a long battery life-time can be achieved Since TM, as defined above, can represent different metals, the operation voltage is expected to vary with the choice of TM or of a mixtures of TMs. This variance is connected to the electochemical potential pair TMn⁺/TM⁽ⁿ⁺¹⁾⁺. A specific, non limiting embodiment is described in the following Example 3.

### Brief description of the figures

**Fig. 1** shows presentations of the unit cells of crystals with a cubic (left) and 4H-hexagonal (right) anti-perovskite structures.
**Fig. 2** shows x-ray diffraction data of Li₂TMSO (TM = Fe, Co, Mn).
**Fig. 3** shows x-ray diffraction data of Li₂TMSeO (TM = Fe, Co, Mn).
**Fig. 4** shows powder x-ray diffraction data of Li₂FeTeO.
**Fig. 5** shows x-ray diffraction data of Li₂FeSeO before and after several cycles of charging and discharging.
**Fig. 6** shows thermal analysis data of anti-perovskite Li₂FeSeO.
**Fig. 7** shows x-ray diffraction data of Li₂FeSeO after heating under inert conditions. Scan 1 and scan 8 are measured with about 2 hours inbetween and the differences are due to minor normal-air exposure because of leaking sample holder.
**Fig. 8** shows TG-DTA data and x-ray diffraction data of Li₂FeSeO after exposition to dry air and normal air, respectively; **8A:** TG-DTA measurement at 30°C of Li₂FeSeO in dry air; **8B:** x-ray diffraction data of pristine Li₂FeSeO and the same powder after 5h exposure to dry air, where scan 1 and scan 8 are measured with about 2 hours inbetween and the differences are due to minor normal-air exposure because of leaking sample holder; **8C:** x-ray diffraction data of pristine Li₂FeSeO and the same powder after 1.5 h exposure to normal air.
**Fig. 9** shows principal steps used for assessing the crystalline material of the invention: 1 - pre-charging; 2 - charging at constant current; 3- charging at constant potential; 4 - discharging.
**Fig. 10** shows charge/discharge curves of a Li-battery with Li₂FeSeO as a cathode and graphite as anode in the voltage range from 1.3-2.5 V; **A:** at 5, 10, 20 mA; **B:** at 40, 60 mA
**Fig. 11** shows charge/discharge curves of a Li-battery with Li₂FeSeO as a cathode at 80 mA.
**Fig. 12** shows the specific charge capacity of Li₂FeSeO at different charge rates.
**Fig. 13** shows shows charge/discharge curves of a Li-battery with Li₂FeSO as a cathode and graphite as anode in the voltage range from 1.2-2.8 V; **A:** charge/discharge at 3 and 5 mA; **B:** obtained specific capacities.

The following, non-limiting examples are given to illustrate the present invention in more details.

### EXAMPLE 1

### Synthesis of exemplary crystalline bulk materials

For the solid state reactions of the Li-containing anti-perovskites, Li₂O was first synthesized by thermally decomposing LiOH, according to Brauer [Handbuch der Präparativen Anorganischen Chemie, pages 950 ff, Ferdinand Elke Verlag, 1978):

2 LiOH ---> Li₂O + H₂O

For a typical batch, LiOH is place in a corundum crucible or metal container (e.g. Fe, Ni, Pt, Pd, or Ag). The container/crucible is placed in a silica tube with a glass vent that is subsequently attached to a pumping station. After evacuating the reaction chamber, containing LiOH, the pump is left on during the heating procedure so that the inner pressure remains lower than 10⁻⁴ mbar. When the inside pressure is sufficiently low, the LiOH is slowly heated to 400 °C during 15 h before the faster heating rate is used up to 800 °C (10 h ramping time). A subsequent 5 h isothermal heating ensures x-ray purity of the formed Li₂O that can be directly used for further reactions.

For the synthesis of analogous Na-containing compounds, Na₂O was first prepared by applying the azide-nitrate route according to the formula:

NaNO₃ + 5 NaN₃ ---> 3 Na₂O + 8 N₂,

which procedure is also described by Brauer et al. [ibid].

Alkaline-earth metal oxides can be added as simple oxides, e.g. as BeO, MgO, or CaO, or as metals.

In the next step, powders of the general composition A₂TMDE can be obtained through solid state reactions as outlined below.

For example, in the case that A = Li, TM = Fe, D = Se, and E = O, the following reaction can be used:

Li₂O + Fe + Se ---> Li₂FeSeO

Due to the air-sensitivity of some reactants (e.g. Li₂O), the mixing of the constituents should be performed under inert conditions, preferably in in a glove box filled with either argon or nitrogen. The homogenized powder in placed in crucibles that are commonly made of corundum (Al₂O₃) but also several different metal containers are possible, like Ni, and nobler metals. The reaction heating has to be performed under inert conditions (argon), in vacuum, or in closed silica ampoules. The latter have to be sealed with reduced inner pressures of inert gas before use.

One successful reaction follows heating up to 750 °C at a rate of 50 °C h⁻¹. At 750 °C, the heating is only 2-3 hours depending on the TM used, but all samples have to be quenched to reach high phase purity. This means that the reaction vessel is dropped in (ice-) water or any other cooling medium with relatively high heat capacity. The higher the cooling rate is, the higher phase purity is reached.

### EXAMPLE 2

### Characterization of exemplary crystalline materials

### Crystallinity

The crystallinity of several compounds was tested by powder x-ray diffraction techniques using a Huber Guinier Camera with a Co-radiation (TM = Co, Fe) or Cu-radiation (TM = Mn) source and image-plate detector. Li₂TMSO (TM = Mn, Fe, Co) can be well described with cubic or pseudo-cubic perovskite crystal structures (space group: Pm-3m, No. 221). Typical *a-*lattice parameters depend on TM (Figure 2):
Mn: *a* = 3.9697 (7) Å, Fe: *a* = 3.9124 (6) Å, Co: *a* = 3.8877 (7) Å.

Figure 2 shows the X-ray diffraction data of Li₂TMSO (TM = Fe, Co, Mn) where minor unknown impurities are marked with * and a characteristic intensity of Li₂S can be observed.

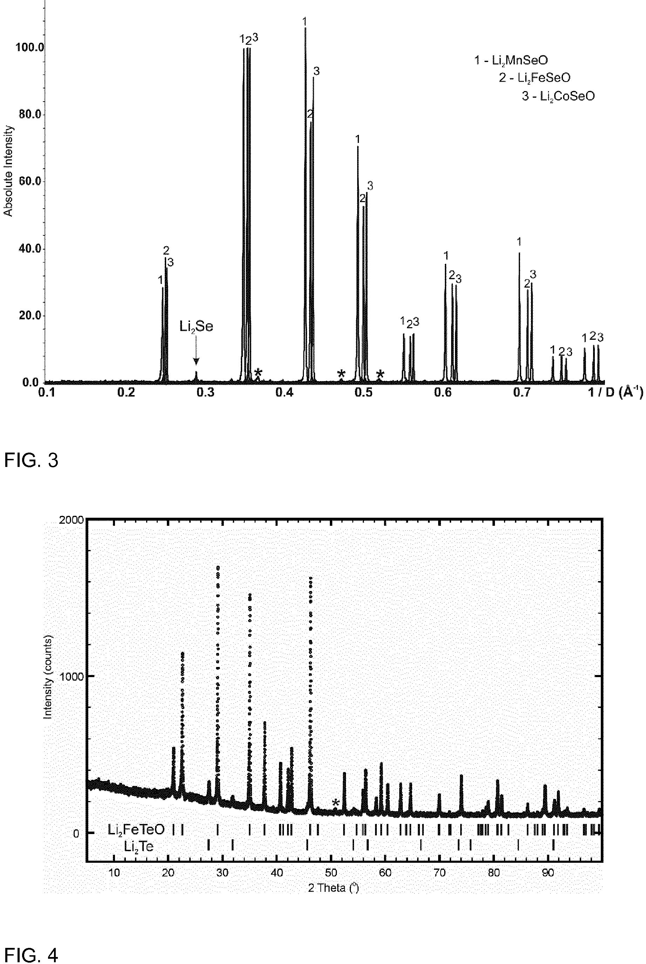

In the same way, Li₂TMSeO (TM = Mn, Fe, Co) were proven to be cubic or pseudo-cubic perovskites with Mn: *a* = 4.0587(2) Å, Fe: *a* = 3.999(3) Å, Co: *a* = 3.9703(3) Å (Fig. 3).

Figure 3 shows the x-ray diffraction data of Li₂TMSeO (TM = Fe, Co, Mn) where minor unknown impurities are marked with * and a characteristic intensity of Li₂Se can be observed.

So far, only TM = Fe has given a hexagonal perovskite with A = Li, D = Te, and E = O, resulting in Li₂FeTeO, but it is expected that more compositions will have this hexagonal crystal structure, on the other hand, trigonal or rhombohedral settings are also possible. The purity of this novel compound was determined also by x-ray diffraction (Figure 4). There is about 3 vol% Li₂Te in the sample.

Figure 4 shows the powder x-ray diffraction data of Li₂FeTeO where observations are grey and simulated pattern is superimposed with a full black line. The positions of expected Bragg intensities are marked with vertical lines. Characteristic intensities of Li₂Te can be observed along with an unknown intensity, marked with *.

### Elemental analyses

By inductively coupled plasma-optical emission spectroscopy (ICP-OES), it was demonstrated that the metal compositions for three synthesized compounds are very close to the nominal ones:
A = Li, TM = Fe, D = Se, E = O: Li_{2.01(1)} Fe_{1.00(4)} Se_{1.005(3)} O_{1.00(3)}
A = Li, TM = Co, D = Se, E = O: Li_{1.89(2)}Co_{1.00(2)}Se_{1.01(2)}O_{0.89(1)}
A = Li, TM = Fe, D = S, E = O: Li_{1.99(4)}Fe_{1.00(2)}S_{1.004(6)}O_{0.95(4)}

### Crystallinity before and after charging of Li₂FeSeO

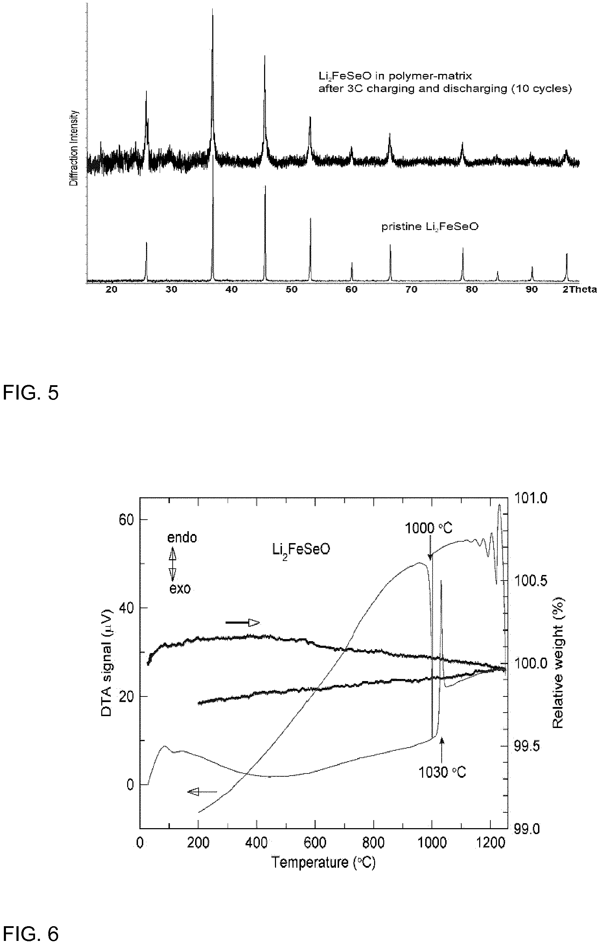

Figure 5 shows x-ray diffraction patterns using Co-radiation. (bottom) as-synthesized Li₂FeSeO (pristine) and (top) the same batch after placing it in the polymer matrix and using it as battery on charging as discharging 10 cycles at 3C rate.

In addition to that the material Li₂FeSeO is performing well on charging and discharging, the crystallinity remains about the same after cycling the material in a battery during about 50 cycles at different C rates - the highest was 3C for the material shown in Figure 5. The peaks are broadening somewhat after the charging/discharging treatment but only the main phase is obvious as crystalline phase. The broadening might be related to the partial Li-extraction and the cation disorder resulting thereof in the presented phase, i.e. the last charging cycle was interrupted at about half-charged state.

### Thermal stability

Figure 6 shows the data of a thermal analysis of antiperovskite Li₂FeSeO, as heated in argon atmosphere up to 1250 °C and cooling down to 200 °C (heating and cooling progressed at 10 °C min⁻¹) Differential thermal analysis (DTA) data are shown with a thin line and thermo-gravimetry (TG) with a thicker line. Melting/solidifying anomalies are marked with arrows and approximate temperatures.

Under inert conditions, Li₂FeSeO exhibits no obvious phase transitions up to about 1030 °C, where a normal melting transition occurs. The compound solidifies close to 1000 °C. In the whole temperature range up to 1250 °C there is no obvious weight loss.

This is confirmed by the powder x-ray diffraction data.

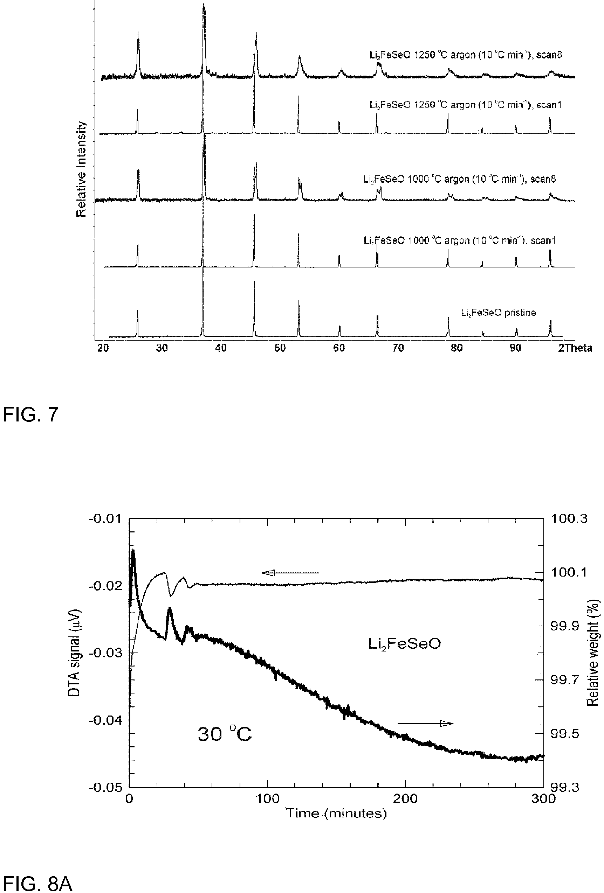

Figure 7 shows powder x-ray diffraction data of pristine Li₂FeSeO compared with the powder data of a sample heated up to 1000 °C (below melting point) and 1250 °C (above melting point); both with first and last scans are displayed to show the decomposition in normal air.

Below and above the melting, the cubic anti-perovskite Li₂FeSeO is dominating in the sample (>95 vol%). Only the melted and recrystallized sample (1250 °C) contains minor diffraction peaks that do not belong to the cubic phase but perhaps to tiny amounts of hexagonal FeSe, Fe₃Se₄, and Li₂Se.

### Oxygen and moisture sensitivity

Figure 8A: TG-DTA measurement at 30 °C of Li₂FeSeO in dry air.

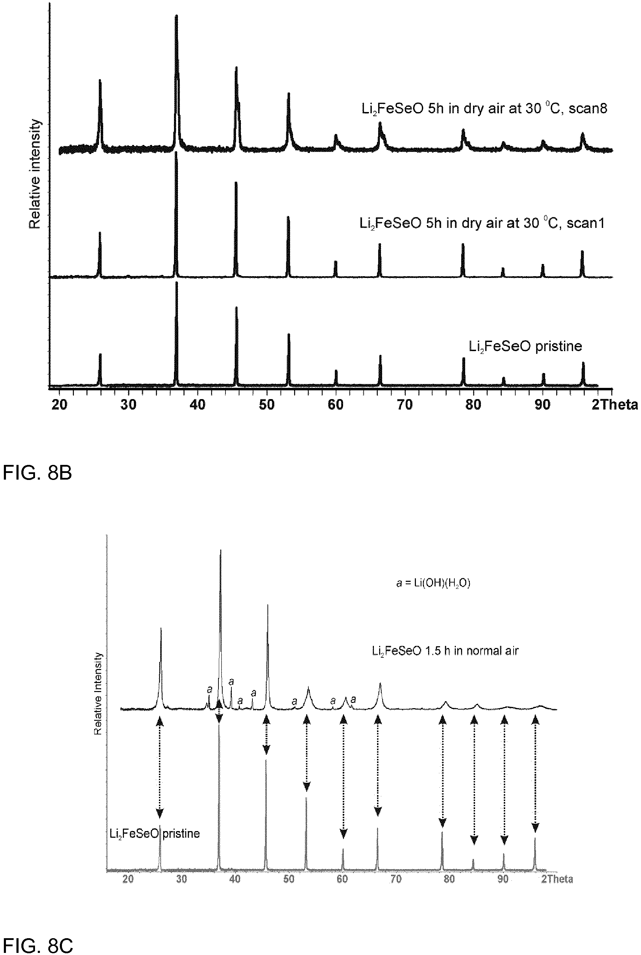

Figure 8B: Powder x-ray diffraction data of pristine Li₂FeSeO and the same powder exposed to dry air during 5 h. Scans 1 and 8 are shown to depict the sample deterioration during the diffraction measurements, which is done in normal air. The sample of scan 1 was exposed to normal air, by the fact that the sample holder was leaking, for a time period of about 15 minutes whereas the sample of scan 8 was exposed to normal air through a holder leak for a time period of close to 2 hours.

Figure 8C: Powder x-ray diffraction of pristine Li₂FeSeO and of a sample that was intentionally, fully exposed to normal air for 1.5 hours. The arrows indicate the common diffraction peaks in the two compared diffraction patterns. Identified secondary phases are marked with letters.

Li₂FeSeO is relatively stable in dry air, which normally contains about 21% of oxygen. During 5 h, the sample weight is fairly stable and there seems to be no phase transition (Fig. 8A). Moreover, the powder x-ray diffraction data of the sample exposed to dry air (5 h) has not significantly changed its crystalline character (Fig. 8B).

However, during exposure to normal air in the course of the diffraction experiment, the diffraction pattern of the Li₂FeSeO sample changes, suggesting a certain degree of sample decomposition (Fig. 8C).

Fig. 8C shows the formation of the hydrate Li(OH)(H₂O), but no Li(OH) (as in the case of Li₂FeSO, data not shown), which agrees with a slow Li-leaching, as all Li is oxidized and reacts with water according: Li + 2 H₂O → Li(OH)(H₂O) + ½ H₂. All identifiable decomposition products are environmentally compatible, i.e. non-toxic.

### EXAMPLE 3

### Charging/Discharging characteristics of the battery material Li₂FeSeO

A model system for a lithium battery using exemplary materials as defined above was built and tested as follows.

Aluminium and copper plates (5×5 cm) were used as current collectors for cathode and anode, respectively. For slurries preparation the active material Li₂FeSeO or Li₂FeSO (in cathode case) and graphite (Alfa-Aesar 99.8%, ∼325 mesh) for anode slurry, carbon black (Alfa-Aesar, acetylene compressed, 99.9+%, S>A, 75 m²g⁻¹, bulk density 80-120 gL⁻¹) and PVdF (Sigma Aldrich) were mixed in mass ratio 85:5:10 in N-methylpyrrolidone (Sigma Aldrich, anhydrous, 99.5%). All slurries were made homogenized by hand and distributed on respective metallic plate with subsequent heating at 100 °C for 1-2 h for removal of organic solvent (NMP). Each plate had an area of about 25 cm² and 0.3 grams of active materials in slurries was used. As separator between two electrodes the non-woven material (Freudenberg, FS2226) was used. The separator was wetted with commercially available electrolyte solution (1.0 M LiPF₆ in ethylene carbonate (EC) and ethylmethyl-carbonate (EMC) mixture - 50:50 by volume - from Sigma Aldrich). The build-up of the metallic plates, with dried slurries, and an intermediate, wetted separated was situated in plastic bag (properly closed and filled with additional amount of electrolyte). Each metallic plate had an extension without slurry that reached out of the plastic bag. These ends of the collector plates were connected to potentiostat BioLogic SP300. All preparation steps and electrochemical measurements were carried out in argon box (MBraun).

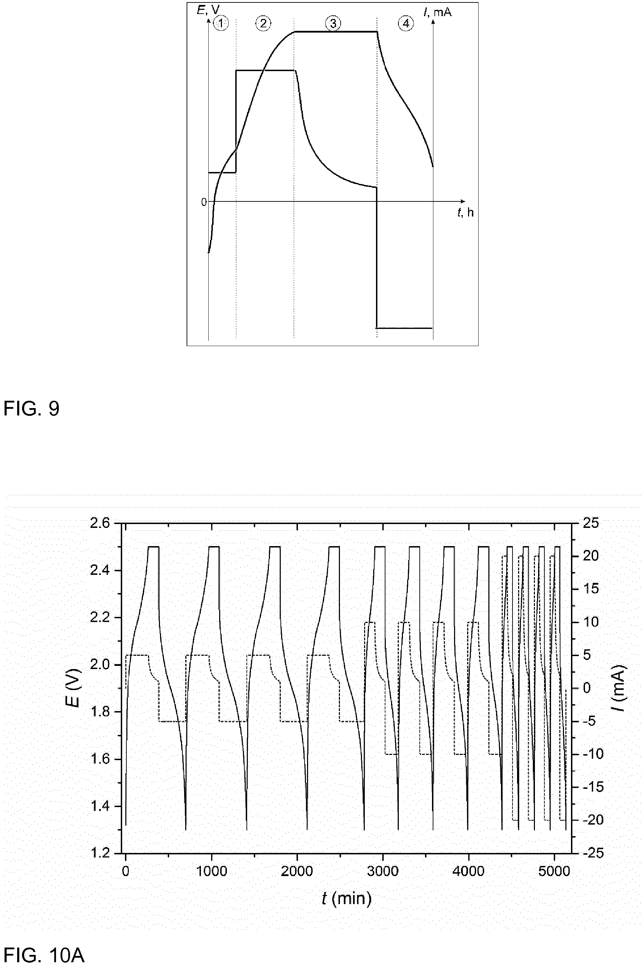

The following steps (as shown in Fig. 9) were used for preliminary screening of new compounds as suitable cathode materials.

Steps of electrochemical experiments: 1 - pre-charging; 2-charging at constant current; 3 - charging at constant potential; 4 - discharging.

Open circuit voltage (OCV) was measured at the beginning, in between each charging-discharging step and at the end of cycling experiment. Galvanostatic Cycling with Potential Limitation (GCPL7) method was applied for data collection. Pre-charging (step 1, Fig. 9) was performed using different currents. The limiting potential was chosen based on OCV values and pre-charging experiments and it was kept for current drop to ca. 0.2C (steps 2-3, Fig. 9). Discharge was done mainly at the same current (as charge) with opposite polarity (step 4, Fig. 9). During cycling, the discharge was limited to a cut-off potential to prevent battery failures by over-discharging.

Open circuit potential of a fully discharged battery composed of Li₂FeSeO cathode and graphite anode is equal to -1.01 V. Pre-charging was done stepwise with increasing current from 0.1 to 3.0 mA. The voltage frame was adjusted with limitation potential 2.5 V and cut-off voltage equal to 1.3 V.

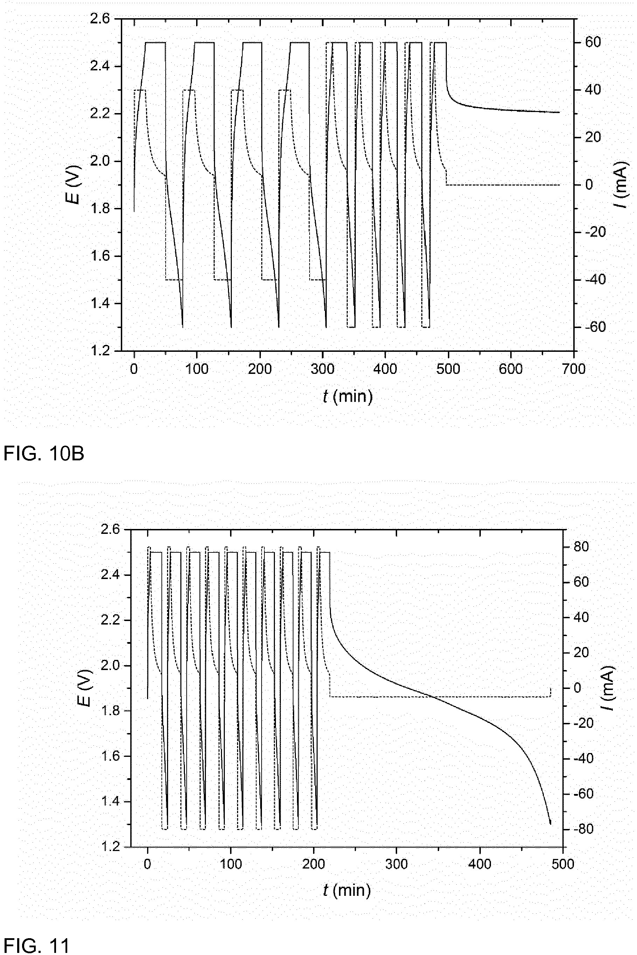

Figure 10. Charge-discharge curves of Li-ion battery with Li₂FeSeO as cathode at 5; 10; 20 mA (left) and 40; 60 mA (right)

In Fig. 10A results of charge-discharge cycling at low (*C*/4, *C*/2 and 1*C*) rates are illustrated. Rates were estimated on experimental values of battery capacity from pre-charging experiments. No capacity changes were observed within the cycling at constant rate whereas with increasing rate capacity decreases smoothly.

As the above-mentioned battery was able to survive the cycling in safe mode, cycling at higher rates were performed (2*C* and 3*C*, Figure 10B). Open circuit voltage measurement after last charging cycle at 60 mA led to the nominal potential of 2.2 V.

The highest applied charge/discharge current is 80 mA which is close to 4*C* rate (Fig. 11).

Figure 11. Charge-discharge curves of Li-ion battery with Li₂FeSeO as cathode at 80 mA with final discharge step at 5 mA.

After nine full cycles at 80 mA (corresponding to ∼3.2 mA cm⁻²), a tenth cycle was performed with charge at 80 mA and discharge at 5 mA aiming to check if the battery capacity can be restored after sequence of cycling at high rates. The latter discharge cycle led to specific capacity 78 mAh g⁻¹ which is very close to the specific capacities obtained at the beginning of cycling experiments at low rates.

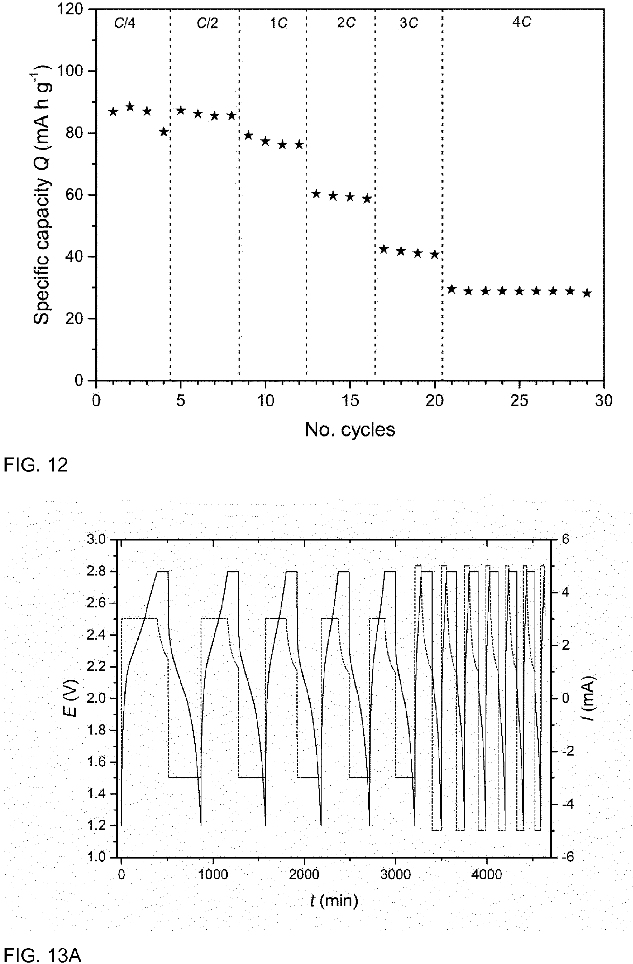

Specific capacities were calculated taking into account discharge current, time for discharge step, and mass of used active material for assembling the battery. The summary of specific capacity values obtained from above-described cycling experiments is given in Figure 12.

Figure 12 shows specific capacities of Li-ion battery with Li₂FeSeO as cathode during cycling at different rates.

Clearly, increasing of applied current led to the decreasing of specific capacities from ca. 90 mAh g⁻¹ up to 30 mAh g⁻¹. It is important to mention that after dropping to about 1/3 capacity at highest charge rate the capacity can be restored to value of 78 mAh g⁻¹ using discharge at *C*/4 (Figure 14). However, this loss of capacity (and its relative size) on high charge/discharge rates is normal for any conventional battery material.

The first experiments using Li₂FeSO as cathode compound were performed. Open circuit voltage is even more negative as in case of Li₂FeSeO and equal to -1.20 V. Pre-charging was done similarly to Li₂FeSeO assembly. Limitation potential for charging step was estimated at 2.8 V, whereas discharge was limited to 1.2 V.

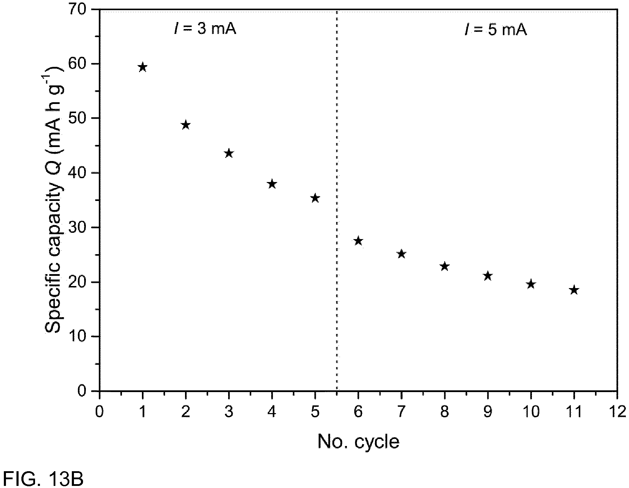

Results of charge-discharge cycling at 3 and 5 mA are depicted in Figure 13.

Figure 13A shows the charge-discharge curves of Li-ion battery with Li₂FeSO as cathode and graphite at anode at 3 and 5 mA and Figure 13B shows the obtained specific capacities. The voltage frame was adjusted with limitation potential 2.8 V and cut-off voltage equal to 1.2 V. The decreasing capacity on cycling is probably due to loss of liquid electrolyte, because in this experiment the plastic bag container was not completely sealed.

## Claims

**1.** A crystalline material having the formula A_{3-(x+y)}TM_{y}DE, wherein
A = a cation selected from alkali metal or earth alkali metal ions and mixtures thereof,
TM = a transition metal cation,
D and E are 2 different anions,
x may be in the range from 0 ≤ x ≤ 2, preferably in the range from 0 ≤ x ≤ 1.5, more specifically in the range from 0 ≤ x ≤ 1, in particular 0,
y may be in the range from 0 < y ≤ 2, preferably in the range from 0.5 < y < 1.5, typically in the range from 0.9 < y < 1.1, in particular 1,
the sum of the negative formal charges of D + E is in the range from -4 to -8,
and with the proviso that the material does not contain structure-building halogen atoms or ions.

**2.** The crystalline material according to claim 1, wherein the anions D and E are anions of elements from groups 13-16 of the periodic system, in particular selected from the group comprising B, Al, C, Si, Sn, Pb, N, P, As, Sb, Bi, Ga, Ge, In, O, S, Se, Te, and Tl, but typically O, S, Se, and Te.

**3.** The crystalline material according to claim 1 or 2, wherein the transition metal (TM) is selected from the group comprising the elements having an atomic number in the range from 21-30, 39-48, 57-80, preferably in the range from 21-30, and mixtures thereof.

**4.** The crystalline material according to any one of claims 1-3, which has an anti-perovskite structure.

**5.** The crystalline material according to any one of claims 1-4, which has a cubic or pseudocubic lattice structure, in particular for D = S or Se and E = O, and hexagonal, trigonal, or rhombohedral lattice structure, in particular for D = Te and E = O.

**6.** The crystalline material according to any one of claims 1-5, wherein A is Li, TM is selected from Fe, Co, Mn, D is selected from S, Se and Te, E is O, and y is preferably 1.

**7.** A method for preparing the crystalline material according to any one of claims 1-6, comprising at least the following steps:
a) preparing a powdery mixture of A₂D + TME, or AD + A + TME, or A₂E + TMD, or AE + A + TMD, or A₂D + TM + E, or AD + A + TM + E, or A₂E + TM + D, or AE + A + TM + D;
b) heating the mixture up to a temperature of at least 600 °C;
c) quenching the product obtained in step b) to room temperature, whereby a crystalline material according to any one of claims 1-6 is obtained,
and wherein at least step b), preferably all steps are performed in an inert gas atmosphere or *in vacuo*.

**8.** The method according to claim 7, wherein the heating is effected at a heating rate of 30-70 °C h⁻¹ for a time period in the range from 1 to 10 hours, and the quenching is effected within a time period in the range from 1 s to 1 hour, preferably within 1 minute.

**9.** The method according to claim 7 or 8 for preparing Li₂FeSeO, wherein
a) a powdery mixture of Li₂O, Fe and Se is prepared;
b) said mixture is heated up to a temperature in the range 730 to 770 °C at a heating rate of about 50°C h⁻¹ for a time period in the range from 1-10 h, preferably 2-5 h or 2-3 h.

**10.** Use of the crystalline material according to any one of claims 1-6 as an electrode material.

**11.** The use according to claim 10, **characterized in that** the crystalline material, as defined in any one of the claims 1-6, is present on a plate or foil of electronically conducting substrate material selected from the group consisting of metals, metal alloys, and electrically conducting plastics.

**13.** The use according to Claim 11, **characterized in that** the substrate material constitutes the cathode or the anode, preferably the cathode, of an electrochemical storage device.

**14.** The use of a crystalline material according to any one of claims 1-6 as an electro-active separator material, a semi-permeable membrane, thermoelectrics, or read/writeable data storage material.

**15.** An electrode comprising the crystalline material according to any one of claims 1-6.

**16.** An electrochemical storage device comprising the crystalline material according to any one of claims 1-6 or the electrode acording to claim 15, in particular as a cathode, as well as an ion conducting electrolyte.

**17.** The electrochemical storage device according to claim 16, **characterized in that** it is a secondary battery, in particular a lithium ion storage unit.
